# EUROPEAN PATENT APPLICATION

(11) **EP 4 386 101 A1**
(43) Date of publication of application: **19.06.2024**
(21) Application number: 22860597.8
(22) Date of filing: 25.08.2022
(51) Int. Cl.: C22C 38/06, C22C 38/04, B22F 3/12

(54) **LIGHTWEIGHT STEEL AND PREPARATION METHOD THEREFOR, STEEL STRUCTURAL MEMBER AND ELECTRONIC DEVICE**

(30) Priority: 27.08.2021 CN 202110994339
(71) Applicant: Huawei Technologies Co., Ltd., Shenzhen, Guangdong 518129 (CN)
(72) Inventor: LI, Longyu, Shenzhen, Guangdong 518129 (CN); CAI, Ming, Shenzhen, Guangdong 518129 (CN); XU, Xiaoming, Shenzhen, Guangdong 518129 (CN)
(74) Representative: Epping - Hermann - Fischer
(86) International application number: PCT/CN2022/114865
(87) International publication number: WO 2023/025251

(57) **Abstract**

This application provides a lightweight steel, including: Fe, in a percentage by weight greater than or equal to 48.18 wt%; Mn, in a percentage by weight of 30.01 wt% to 35.01 wt%; Al, in a percentage by weight of 12.01 wt% to 15.01 wt%; C, in a percentage by weight of 1.0 wt% to 1.5 wt%; and O, in a percentage by weight of 0.03 wt% to 0.3 wt%. This application further provides a steel structural part and an electronic device that use the lightweight steel, and a preparation method of the lightweight steel. The lightweight steel provided in this application has low density, high strength, and high ductility.

## Description

### CROSS-REFERENCE TO RELATED APPLICATIONS

This application claims priority to Chinese Patent Application No. 202110994339.8, filed with the China National Intellectual Property Administration on August 27, 2021 and entitled "LIGHTWEIGHT STEEL AND PREPARATION METHOD THEREOF, STEEL STRUCTURAL PART, AND ELECTRONIC DEVICE", which is incorporated herein by reference in its entirety.

### TECHNICAL FIELD

This application relates to a lightweight steel and a preparation method thereof, and a steel structural part and an electronic device that use the lightweight steel.

### BACKGROUND

A rotating shaft mechanism of an existing foldable phone is substantially made of two materials. One is a precipitation-hardened steel with good comprehensive performance in mechanical properties, such as high strength and good toughness, where a yield strength is about 1000 MPa and an elongation is about 6%, but a high density is about 7.8 g/cm³. The other is an aluminum alloy with a low density of about 2.7 g/cm³, but low strength. Currently, a 7xxx series aluminum alloy, such as 7075, with the highest strength grade, has a yield strength of about 500 MPa, and is prone to deformation during use.

### SUMMARY

According to a first aspect in embodiments of this application, a lightweight steel is provided, including:
Fe, in a percentage by weight greater than or equal to 48.18 wt%;
Mn, in a percentage by weight of 30.01 wt% to 35.01 wt%;
Al, in a percentage by weight of 12.01 wt% to 15.01 wt%;
C, in a percentage by weight of 1.0 wt% to 1.5 wt%; and
O, in a percentage by weight of 0.03 wt% to 0.3 wt%.

According to the composition of the lightweight steel in this application, a high-content aluminum element (12.01 wt% to 15.01 wt%) and a high-content oxygen element (0.03 wt% to 0.3 wt%) are creatively designed, to form aluminum oxide, so that an aluminum oxide strengthening phase is formed in the lightweight steel, thereby improving strength and ductility of the lightweight steel. The addition of A1 element in the steel can improve the density of the steel making the steel light. In this application, the lightweight steel has a high Al content (12.01 wt% to 15.01 wt%), so that the lightweight steel has a low density of 5.9 g/cm³ to 6.3 g/cm³, thereby significantly reducing a weight of a consumer electronic product that uses the lightweight steel, and improving user experience. The lightweight steel in this application is a material with high strength, high ductility, and low density.

In an implementation of this application, aluminum oxide particles are distributed in the lightweight steel, and the aluminum oxide particles substantially have a length and a width both less than or equal to 5 µm.

The aluminum oxide phase with a small particle size is dispersed in the lightweight steel, and mainly has a function of dispersion strengthening at a phase interface, thereby improving strength of the lightweight steel.

In an implementation of this application, the lightweight steel further includes V in a percentage by weight less than or equal to 0.6 wt%.

The V element mainly works in two ways. V is a strong carbide forming element, and can improve stability of a carbon element during sintering. After the carbon element forms κ phase, excess carbon cooperates with the V element. In an aspect, cooperation between carbon and oxygen is reduced, thereby preventing the oxygen element in the steel material from escaping in a form of CO₂. In another aspect, the formation of VC also improves strength of the steel.

In an implementation of this application, the percentage by weight of V in the lightweight steel is 0.2 wt% to 0.55 wt%.

In an implementation of this application, the percentage by weight of Mn in the lightweight steel is 30.01 wt% to 32.01 wt%.

In an implementation of this application, the percentage by weight of A1 in the lightweight steel is 12.5 wt% to 13.5 wt%.

In an implementation of this application, the percentage by weight of C in the lightweight steel is 1.1 wt% to 1.45 wt%.

In an implementation of this application, the percentage by weight of O in the lightweight steel is 0.05 wt% to 0.2 wt%.

In an implementation of this application, the lightweight steel further includes another element including one or more of nitrogen, copper, chromium, nickel, titanium, sulfur, phosphorus, boron, hydrogen, zirconium, silicon, tantalum, calcium, zinc, and rare earth metals, in a percentage by weight less than or equal to 1%.

In an implementation of this application, the lightweight steel is formed through a metal injection molding process using a powder raw material.

A small and precise lightweight steel part with a complex curved surface can be formed through the metal injection molding process, which can be widely used in various electronic products.

In an implementation of this application, a density of the lightweight steel is 5.9 g/cm³ to 6.3 g/cm³. In an implementation of this application, a yield strength of the lightweight steel is 700 MPa to 1200 MPa, and an elongation of the lightweight steel is 1.5% to 20%.

The lightweight steel has low density, high strength, and high ductility. As the strength of the steel is high, a thickness of a steel structural part that uses the lightweight steel does not need to be increased to ensure reliability of the steel structural part, which facilitates miniaturization of the steel structural part, thereby facilitating miniaturization of an electronic device.

According to a second aspect in embodiments of this application, a steel structural part is provided. A material used by the steel structural part includes the lightweight steel according to the first aspect in embodiments of this application.

According to a third aspect in embodiments of this application, a preparation method of a lightweight steel is provided, including:
providing a powder raw material, where the powder raw material includes:
Fe, in a percentage by weight greater than or equal to 47.39 wt%,
Mn, in a percentage by weight of 30.01 wt% to 36 wt%,
Al, in a percentage by weight of 12.01 wt% to 15.01 wt%,
C, in a percentage by weight of 0.8 wt% to 1.5 wt%, and
O, in a percentage by weight of 0.003 wt% to 0.1 wt%;
mixing the powder raw material and a binder into a green body;
sintering the green body to form a sintered body; and
performing heat treatment on the sintered body.

By using the lightweight steel formed through the metal injection molding process provided in this application, a three-dimensional complex and precise steel structural part can be effectively obtained at a time. Compared with conventional machining, for example, a complex and precise steel structural part formed by a computer numerical control machine tool, no additional processing is required, thereby improving production efficiency of preparing complex and precise steels, reducing costs of preparing the steels, and facilitating large-scale production of the steels. In an implementation of this application, the mixing the powder raw material and a binder into a green body includes:
mixing the powder raw material and the binder to form a paste feed;
granulating the paste feed to form feed particles; and
molding the feed particles into the green body through injection molding.

The formation of the green body of the lightweight steel through injection molding not only has high forming efficiency and low costs, but also can effectively obtain the green body of the three-dimensional complex and precise lightweight steel at a time, thereby improving production efficiency of preparing the complex and precise lightweight steels. The powder raw material is mixed with the binder. The powder raw material has particular fluidity, which reduces or avoids defects of the green body, such as cracks or corners falling off. In addition, after the powder raw material is mixed with the binder, the formed green body has a specific strength, and can be removed from a mold cavity with its shape unchanged, thereby reducing or avoiding the deformation of the green body, and improving a production yield.

In an implementation of this application, before the sintering the green body, the method further includes: debinding to remove the binder from the green body.

In some embodiments, the binder is removed from the green body by catalytic debinding. The removal of the binder by catalytic debinding is to make the green body undergo debinding in a corresponding atmosphere based on the characteristic of rapid degradation of a polymer in a specific atmosphere, to decompose and remove the binder. In this embodiment of this application, the removal of the binder from the green body by catalytic debinding can not only implement rapid and defect-free debinding, but also increase debinding efficiency, thereby improving efficiency of preparing the steel.

In an implementation of this application, the performing heat treatment on the sintered body includes: performing solution treatment on the sintered body; and performing aging treatment on the sintered body obtained through the solution treatment.

The heat treatment can further enhance the performance of the lightweight steel.

In an implementation of this application, the powder raw material further includes V in a percentage by weight less than or equal to 0.6 wt%.

According to a fourth aspect in embodiments of this application, provided is a steel structural part, prepared by using the preparation method of the lightweight steel according to the third aspect in embodiments of this application.

According to a fifth aspect in embodiments of this application, an electronic device is provided, including the steel structural part according to the second aspect or the fourth aspect in embodiments of this application.

The lightweight steel has low density, high strength, and high ductility. When the lightweight steel is used in an electronic device, a risk of breakage and deformation of a structural component in the electronic device is reduced, thereby improving quality of the electronic device. In addition, the density is low, thereby facilitating the light weight of the electronic device.

In an implementation of this application, the electronic device further includes a flexible display screen and a foldable apparatus configured to carry the flexible display screen, the foldable apparatus is configured to drive the flexible display screen to deform, and the foldable apparatus includes the steel structural part.

In an implementation of this application, the foldable apparatus includes a rotating shaft, and the rotating shaft is the steel structural part.

### BRIEF DESCRIPTION OF DRAWINGS

FIG. 1 is a schematic diagram of a structure of an electronic device according to an embodiment of this application;
FIG. 2A and FIG. 2B are scanning electron micrographs of a lightweight steel according to an embodiment of this application; and
FIG. 3 is a schematic flowchart of a preparation method of a lightweight steel according to an embodiment of this application.

### List of reference numerals of main elements

| | |
|---|---|
| Electronic device | 100 |
| Flexible display screen | 20 |
| Foldable apparatus | 30 |

### DESCRIPTION OF EMBODIMENTS

The following describes embodiments of this application with reference to the accompanying drawings in embodiments of this application. Unless otherwise specified, a parameter range involved in this application includes an endpoint value.

Structural components of consumer electronic products are usually small and precise parts with complex three-dimensional structures, and satisfy the requirements for smooth operation and structural reliability of a mechanism. Therefore, the requirements for materials are multidimensional. In addition to light weight and low density, the requirements include at least strength (such as yield strength and tensile strength), plasticity and toughness (such as elongation), and molding processes (such as casting, forging and pressing, stamping, and CNC). The multidimensional requirements are mutually restrictive. For a lightweight steel, whether it is a current metal matrix composite, a hardened cold-rolled plate, or a smelted casting material, there are problems such as insufficient strength, poor plasticity and toughness due to brittleness, insufficient capability of forming complex parts, or high forming costs.

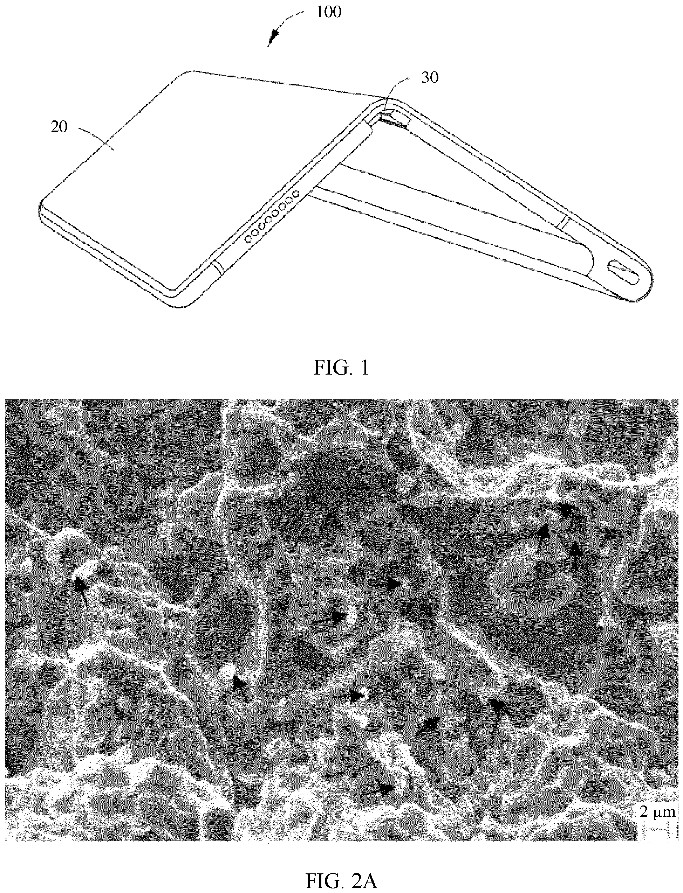

An electronic device in embodiments of this application includes a lightweight steel. The lightweight steel has advantages of low density/light weight, high strength, and being prepared through a metal injection molding (Metal injection molding, MIM) process. The metal injection molding process is suitable for preparation of small and precise parts with complex curved surfaces due to its molding characteristics. The electronic device is a consumer electronic product, such as a mobile phone, a tablet computer, an e-reader, a notebook computer, on-board equipment, a wearable device, or a rollable and foldable electronic newspaper. The electronic device includes structural components, and at least one structural component is made of the lightweight steel. Refer to FIG. 1. An example in which an electronic device 100 is a foldable phone is used for description. The foldable phone shown in FIG. 1 is in a half-folded state. As shown in FIG. 1, the electronic device 100 includes a flexible display screen 20 and a foldable apparatus 30. The flexible display screen 20 is configured to display an image. The foldable apparatus 30 is configured to drive the flexible display screen 20 to deform. For example, the foldable apparatus 30 is connected to the flexible display screen 20, and is configured to drive the flexible display screen 20 to be folded or unfolded. The foldable apparatus 30 includes a rotating shaft, and the rotating shaft can rotate under action of driving force, to drive the flexible display screen 20 to be folded or unfolded. When the electronic device 100 is in an unfolded state, the flexible display screen 20 is on a same plane. As shown in FIG. 1, in another case, the electronic device 100 is in a half-folded state. In this case, one part of a structure of the flexible display screen 20 and the other part of the structure of the flexible display screen 20 are on different planes. The electronic device 100 provided in this application can be folded or unfolded corresponding to different usage scenarios. The electronic device 100 is presented in different forms, to satisfy different requirements of a user.

In embodiments of this application, an example in which a steel structural part using the lightweight steel is the rotating shaft of the electronic device 100 (the foldable phone) is used for description, but this is not limited thereto. In another embodiment, the steel structural part may be another type of structural component in the electronic device 100, such as a camera decorating component, a gear, or a support part that needs to be bent. This is not limited in this application. It may be understood that the lightweight steel may be further used in a vehicle as an on-board structural part.

In the conventional technology, a steel structural part in a foldable apparatus is prone to a risk of deformation or even breakage under large force. In this case, the foldable apparatus is likely to get stuck, and consequently an electronic device cannot implement switching between a folded state and an unfolded state. In addition, the broken steel structural part may press against a flexible display screen, which affects the flexible display screen to display an image, and consequently affects quality of the electronic device. For example, in the conventional technology, a stainless steel used in a foldable apparatus has insufficient strength and poor toughness. When an electronic device falls from a height, a steel structural part in the foldable apparatus is easily broken, which affects a service life of the electronic device.

This application provides a lightweight steel with low density, high strength, and a high elongation. In an aspect, the lightweight steel facilitates the light weight of an electronic device. In another aspect, a risk of fracture failure of a steel structural part of the electronic device 100 after falling can be effectively reduced. In this case, due to high strength of the steel structural part, a thickness of the steel structural part does not need to be increased to ensure reliability of the steel structural part, which facilitates miniaturization of the steel structural part, thereby facilitating miniaturization of the electronic device 100.

The lightweight steel in embodiments of this application includes the following chemical composition:
Fe, in a percentage by weight greater than or equal to 48.18 wt%;
Mn, in a percentage by weight of 30.01 wt% to 35.01 wt%;
Al, in a percentage by weight of 12.01 wt% to 15.01 wt%;
C, in a percentage by weight of 1.0 wt% to 1.5 wt%; and
O, in a percentage by weight of 0.03 wt% to 0.3 wt%.

In some embodiments, the lightweight steel further includes V in a percentage by weight less than or equal to 0.6 wt%. In some embodiments, the percentage by weight of V in the lightweight steel is 0.2 wt% to 0.55 wt%.

In some embodiments, the percentage by weight of Fe in the lightweight steel is less than or equal to 56.95 wt%. In some embodiments, the percentage by weight of Mn in the lightweight steel is 30.01 wt% to 32.01 wt%. In some embodiments, the percentage by weight of A1 in the lightweight steel is 12.5 wt% to 13.5 wt%. In some embodiments, the percentage by weight of C in the lightweight steel is 1.1 wt% to 1.45 wt%. In some embodiments, the percentage by weight of O in the lightweight steel is 0.05 wt% to 0.2 wt%.

The lightweight steel further includes another element including one or more of nitrogen, copper, chromium, nickel, titanium, sulfur, phosphorus, boron, hydrogen, zirconium, silicon, tantalum, calcium, zinc, and rare earth metals, in a percentage by weight less than or equal to 1%.

It may be understood that the lightweight steel may further include another inevitable impurity element, but with an extremely low content, which may be omitted.

The lightweight steel mainly includes austenite, ferrite, and κ phase, which are common constituents in a low-density steel. The austenite is a main phase of the steel matrix. The ferrite is distributed at the austenite grain boundary. The κ phase is a conventional strengthening phase of the low-density steel, and mainly exists in the austenite grains or at the grain boundary. The austenite is a layered microscopic constituent of the steel, and is usually a solid solution formed by dissolving one or more other elements (such as carbon) in γ-Fe, which is also referred to as gamma-phase iron or γ-Fe. The austenite is a face-centered cubic structure, the most close-packed lattice structure, and has a high density. The austenite has good plasticity, low strength, particular toughness, no ferromagnetism. The ferrite is iron or a solid solution with a body-centered cubic lattice structure formed by dissolving one or more other elements (such as carbon) in the iron, and has good plasticity and toughness, but low strength and hardness. The κ phase is a precipitated phase formed by covalent bonding of at least three elements Fe, Al, and C, optionally including Mn.

In this application, the elementAl is one of the core elements of the lightweight steel. Based on a higher content of the aluminum element, a lower density can be obtained. If estimation is performed only by using a simple mixing rule without considering lattice distortion, after the content of the aluminum element exceeds 10 wt%, the density decreases by about 0.1 g/cm³ for every 1 wt% increase of the aluminum element. On the premise that the performance (for example, the yield strength and the elongation that are described in this application) of the steel material is ensured, how to expand an upper limit of the content of the aluminum element is always a major challenge. In this application, the content of the aluminum element is expanded to 12.01 wt% to 15.01 wt%, and good strength and ductility can still be ensured.

When a content range of another element satisfies the requirement of this application, the content of the elementAl ranges from 12.01 wt% to 15.01 wt%. Especially ranging from 12.5 wt% to 13.5 wt%, in addition to the foregoing lower density, a higher strength and/or a higher elongation may be obtained by using a proper process. As shown in Table 1, when contents of another element are consistent, a performance rule obtained through a large quantity of experiments is as follows: In this application, a higher aluminum content increases an upper limit of the yield strength and almost keeps the elongation unchanged, and optimal comprehensive performance is obtained with the combination of the aluminum content (12.5 wt% to 13.5 wt%) and the oxygen content (0.05 wt% to 0.2 wt%).

**Table 1**

| Item | Aluminum content wt% | Oxygen content wt% | Yield strength MPa | Elongation |
|---|---|---|---|---|
| Group 1 | 8-12 | 0.03-0.3 | 800-950 | 2%-20% |
| Group 2 | 12.01-15.01 | 0.03-0.3 | 700-1200 | 1.5%-20% |
| Group 3 | 12.5-13.5 | 0.05-0.2 | 900-1100 | 4%-20% |

The lightweight steel has a high Al content (12.01 wt% to 15.01 wt%), so that the lightweight steel has a low density of 5.9 g/cm³ to 6.3 g/cm³. Compared with a density 7.98 g/cm³ of a conventional steel, the density of the lightweight steel decreases by 21% to 26%, thereby significantly reducing a weight of a consumer electronic product that uses the lightweight steel, and improving user experience.

In a conventional smelted steel (including a low-density steel), the element O is usually controlled as an impurity element. A lower oxygen content indicates a higher grade of a steel, so that the element O is controlled as same as P and S. The oxygen content of a steel is generally required to be less than 0.005 wt%. If the oxygen content exceeds this requirement too much, the steel is of poor quality and cannot be formed or used.

According to the composition of the lightweight steel in embodiments of this application, a high-content aluminum element (12.01 wt% to 15.01 wt%) and a high-content oxygen element (0.03 wt% to 0.3 wt%) are creatively designed, to form aluminum oxide, so that an aluminum oxide strengthening phase is introduced in the lightweight steel.

In this application, the oxygen element is uniformly distributed in the lightweight steel. A method for measuring the O content of the lightweight steel in this application is as follows: Any sampling position of a sample of the lightweight steel, including a new and clean surface obtained by polishing to remove an oxide layer, is sampled, to obtain an oxygen content.

In this application, the oxygen element and the aluminum element are introduced to form aluminum oxide, thereby improving strength of the material and improving plasticity of the material. As shown in Table 2, on the premise that other features are the same, a steel with a higher oxygen content has higher strength and elongation. As shown in Table 2, with other conditions unchanged, a steel with an oxygen content (0.03 wt% to 0.3 wt%) in this application has strength and plasticity that are significantly higher than a steel with a lower oxygen content.

**Table 2**

| Item | Oxygen content wt% | Carbon content wt% | Density g/cm³ | Tensile strength MPa | Yield strength MPa | Elongation % |
|---|---|---|---|---|---|---|
| 1 | 0.0178 | 1.1824 | 6.175 | 510 | 490 | 1.3 |
| 2 | 0.1609 | 1.192 | 6.169 | 1060 | 955 | 7.0 |

The oxygen element mainly works in two ways. In an aspect, an aluminum oxide phase formed from oxygen and aluminum has a small size, is dispersed in the lightweight steel with the composition in this application, and mainly has a function of dispersion strengthening at a phase interface, thereby improving strength of the lightweight steel. In a scanning electron micrograph of the lightweight steel shown in FIG. 2A, particles marked by arrows are aluminum oxide strengthening phases generated in situ (generated by a chemical reaction instead of directly adding aluminum oxide). The aluminum oxide strengthening phases are particles and are dispersed (uniformly distributed) in the lightweight steel matrix. The aluminum oxide strengthening phase may be in an equiaxial shape, an ellipsoid shape, or a long-strip shape. Substantially, both a length and a width of the aluminum oxide particle are less than or equal to 5 µm, for example, between 500 nm and 5 µm. However, a small quantity of aluminum oxide particles may be abnormally large, with a size greater than 5 µm, but a proportion of large-sized aluminum oxide particles generally does not exceed 20%.

In another aspect, with the combination of the oxygen element and the aluminum element, brittleness caused by excessive aluminum elements that cannot form the κ phase is eliminated, thereby improving plasticity of the material. The aluminum element is a ferrite-forming element. Excessive aluminum elements promote the generation of the ferrite phase. Once the ferrite has an excessively high content and is connected into a network, strength, and plasticity and toughness of the material are significantly reduced.

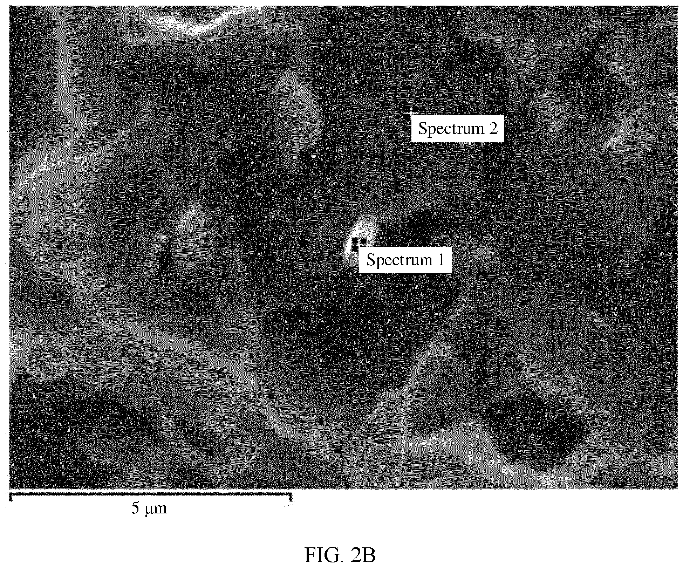

Two positions are selected in a scanning electron micrograph of the lightweight steel shown in FIG. 2B for energy spectrum (EDS) analysis. The position of a spectrum 1 is a position with aluminum oxide, and the position of a spectrum 2 is a position without aluminum oxide. Analysis of types and contents of elements in micro-zones of the material are carried out on the two selected positions.

**Table 3**

| Item | C/wt% | O/wt% | Al/wt% | Mn/wt% | Fe/wt% |
|---|---|---|---|---|---|
| Spectrum 1 | 0.17 | 21.68 | 22.5 | 21.26 | 34.39 |
| Spectrum 2 | 0.19 | 0 | 11.97 | 33.13 | 54.71 |

It can be learned from Table 3 that, no element O is detected at the position of the spectrum 2, but the element O and the element Al are detected at the position of the spectrum 1, and a ratio of A1 atoms to O atoms obtained through conversion based on percentages by mass of the element O and the elementAl is close to 2:3, which verifies existence of aluminum oxide at the spectrum 1.

In addition, the lightweight steel has high strength, with a yield strength of 800 MPa to 1200 MPa, and has high plasticity and toughness, with an elongation of 2% to 20%. The lightweight steel is prepared by using an MIM process, which can implement high-precision and low-cost molding of a small and precise part in a complex three-dimensional shape.

In this application, the addition of the V element mainly works in two ways. V is a strong carbide forming element, and can improve stability of a carbon element during sintering. After the carbon element forms κ phase, excess carbon cooperates with the V element. In an aspect, cooperation between carbon and oxygen is reduced, thereby preventing the oxygen element in the steel material from escaping in a form of CO₂. In another aspect, the formation of VC also improves strength of the steel.

As shown in Table 4, mechanical properties (such as tensile strength, yield strength, and elongation) of a steel sample with V added are significantly improved.

**Table 4**

| Item | Vanadium content wt% | Tensile strength MPa | Yield strength MPa | Elongation % |
|---|---|---|---|---|
| Reference sample | 0 | 980 | 940 | 4.7 |
| Sample | 0.4 | 1060 | 1000 | 4.8 |

For the elements in the lightweight steel in this application, except Fe, Mn, Al, and C, there are direct or indirect interaction relationships between Al and O, between C and O, and between C and V.

A functional coating may be formed on a surface of the lightweight steel as required. The coating may be formed by using a process such as passivation, electroplating, spraying, or physical vapor deposition (PVD).

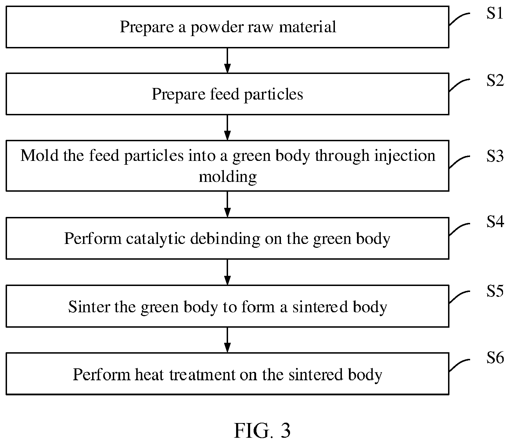

The lightweight steel may be formed through a metal injection molding process using a powder raw material. As shown in FIG. 3, a preparation method of the lightweight steel specifically includes the following steps.

S1: Prepare a powder raw material. The powder raw material includes the following chemical composition:
Fe, in a percentage by weight greater than or equal to 47.39 wt%,
Mn, in a percentage by weight of 30.01 wt% to 36 wt%,
Al, in a percentage by weight of 12.01 wt% to 15.01 wt%,
C, in a percentage by weight of 0.8 wt% to 1.5 wt%, and
O, in a percentage by weight of 0.003 wt% to 0.1 wt%.

In this embodiment of this application, the powder raw material may be prepared by using an atomization method, a reduction method, a mechanical grinding method, or the like. A particle size D50 of the powder raw material is 5 µm to 15 µm (with a particle size of 90% of particles less than or equal to 45 um), and may be correspondingly adjusted as required. The powder raw material may further include V in a percentage by weight less than or equal to 0.6 wt%.

The powder raw material may be usually prepared in two ways. One is to prepare a powder after pre-alloying, where elements exist in alloy forms. The other is to mix various elementary substances or various compounds in an adjustable ratio, to obtain a powder that is still in a form of various elementary substances or various compounds. In this embodiment of this application, oxygen (O) may exist in a form of iron oxide or the like, or microscopically oxygen atoms exist in gaps of metal atoms (for example, Fe).

S2: Prepare feed particles. The powder raw material in the step S1 is mixed with a binder, prior to granulation, to form the feed particles.

The powder raw material in the step S1 is uniformly mixed with the binder in a specific volume ratio (56:44), to form a paste feed; and the paste feed is granulated to form the feed particles. The granulation may be carried out by using a granulator. The binder is dedicated to an alloy powder, usually an organic binder, and is used to bond the powder raw material together, for subsequent injection molding.

S3: Mold the feed particles in the step S2 into a green body through injection molding.

The feed particles in the step S2 are added in an injection molding machine, injected into a mold cavity, and molded into the green body.

The formation of the green body of the lightweight steel through injection molding not only has high forming efficiency and low costs, but also can effectively obtain the green body of the three-dimensional complex and precise lightweight steel at a time, thereby improving production efficiency of preparing the complex and precise lightweight steels. The powder raw material is mixed with the binder. The powder raw material has particular fluidity, which reduces or avoids defects of the green body, such as cracks or corners falling off. In addition, after the powder raw material is mixed with the binder, the formed green body has a specific strength, and can be removed from a mold cavity with its shape unchanged, thereby reducing or avoiding the deformation of the green body, and improving a production yield.

S4: Perform debinding on the green body.

In some embodiments, catalytic debinding (at a temperature set to 110°C to 160°C with fuming nitric acid as a catalyst) is carried out on the green body to remove a part of the binder from the green body.

The removal of the binder by catalytic debinding is to make the green body undergo debinding in a corresponding atmosphere based on the characteristic of rapid degradation of a polymer in a specific atmosphere, to decompose and remove the binder. In this embodiment of this application, the removal of the binder from the green body by catalytic debinding can not only implement rapid and defect-free debinding, but also increase debinding efficiency, thereby improving efficiency of preparing the steel.

S5: Sinter the green body to form a sintered body.

The green body obtained through catalytic debinding is put in a sintering furnace and sintered at a specific temperature (for example, 1150°C to 1300°C) in an atmosphere (for example, Ar, H₂, or vacuum).

The sintering refers to a process of converting a powder material (the powder raw material described in this application) into a dense body. Molecules or atoms in a solid state are enabled to migrate with sufficient energy obtained by heating, so that particle bonding occurs in the powder body, increasing strength and causing densification and recrystallization. For example, in this embodiment of this application, the sintering may be heating at 1150°C to 1300°C for 2 h to 3 h. During the sintering, the binder is removed.

S6: Perform heat treatment on the sintered body.

The sintered body obtained in the step S5 is subject to solution treatment (for example, at a temperature set to 1000°C to 1180°C for 1 h) and aging treatment (for example, at 350°C to 550°C for 2 h) in a heat treatment furnace. Finally, a steel with good comprehensive mechanical properties is obtained.

The solution treatment refers to a heat treatment process of heating an alloy (a product obtained through sintering in this application) to a constant temperature of a high-temperature single-phase region for a particular time to fully dissolve an excess phase in a solid solution, and then quickly cooled to obtain a supersaturated solid solution. The purpose of the solution treatment is to dissolve a second phase, γ' phase, and the like in the matrix to obtain a uniform supersaturated solid solution, so as to re-precipitate a strengthening phase with fine and uniformly distributed particles, such as a precipitated phase and γ' phase, during aging treatment, and eliminate stress caused by cold and hot processing, to recrystallize the alloy.

The aging treatment refers to a heat treatment process of putting the product obtained through the solution treatment in this application at a high temperature or room temperature to make a shape, size, and performance of the product change with time.

An embodiment of this application further provides a steel structural part (not shown in the figure) formed by using the foregoing preparation method. The steel structural part is obtained by using the foregoing method, so that the steel structural part has low density, high strength, and high ductility. The steel structural part is not prone to breakage and deformation, and has a long service life.

An embodiment of this application further provides a steel structural part (not shown in the figure). A material used by the steel structural part includes the foregoing lightweight steel. The material used by the steel structural part includes the foregoing lightweight steel, so that strength of the steel structural part is increased. By using the steel structural part, a thickness of the steel structural part does not need to be increased to further ensure reliability of the steel structural part, thereby facilitating miniaturization of the steel structural part.

The following further describes embodiments of this application by using specific examples.

### Examples 1 to 6

A preparation method of a lightweight steel in Example 1 is specifically as follows.
(1) An alloy powder was prepared by using an atomization method, with particle sizes D50 of 5 um to 15 um and D90 less than or equal to 45 um.
(2) The powder and a binder were fully mixed in a volume ratio of 56/44 at 180°C, to prepare a feed. The composition of the used binder includes polyformaldehyde (POM), ethylene-vinyl acetate (EVA) copolymer, polyvinyl (PE), microcrystalline wax (CW), and stearic acid (SA) in a weight ratio of 85: 1:5.5:2:1.
(3) The feed was added in an injection molding machine, injected into a mold cavity, and molded into a green body. The molded green body was subject to catalytic debinding at a temperature of 130°C with fuming nitric acid as a catalyst, to remove a part of the binder.
(4) Sintering was carried out at 1200±5°C for 2 h to 3 h.
(5) Solution treatment was carried out at 1100±5°C for 1 h.
(6) Aging treatment was carried out at 500±5°C for 2 h.

Process parameters and corresponding test results in the other examples 2 to 6 are shown in Table 6. In addition to these, other parameters and steps are the same as those in Example 1. Specific compositions of six types of steel products obtained in Examples 1 to 6 are shown in Table 5. In Table 5, the percentage by weight of Fe is an allowance, which indicates a percentage by weight obtained by subtracting percentages by weight of other listed elements from 1.

**Table 5**

| wt% | Mn | Al | C | O | V | Fe |
|---|---|---|---|---|---|---|
| Example 1 | 32.2 | 12.31 | 1.192 | 0.1609 | 0.29 | Allowance |
| Example 2 | 33.4 | 12.53 | 1.2049 | 0.2339 | 0.4 | Allowance |
| Example 3 | 32.05 | 13.01 | 1.1784 | 0.1877 | 0.21 | Allowance |
| Example 4 | 33.8 | 13.43 | 1.1491 | 0.1554 | 0.22 | Allowance |
| Example 5 | 30.1 | 12.02 | 1.3319 | 0.0956 | 0.42 | Allowance |
| Example 6 | 31.6 | 12.11 | 1.4493 | 0.1617 | 0.51 | Allowance |

**Table 6**

| Example | Sintering °C | Solution treatment °C | Aging treatment °C | Density g/cm³ | Tensile strength MPa | Yield strength MPa | Elongation % |
|---|---|---|---|---|---|---|---|
| Example 1 | 1200 | 1100 | 550 | 6.169 | 1060 | 955 | 7.0 |
| Example 2 | 1220 | 1100 | 450 | 6.212 | 1060 | 1000 | 4.8 |
| Example 3 | 1220 | 1100 | 450 | 6.155 | 1030 | 985 | 2.1 |
| Example 4 | 1195 | 1150 | 550 | 6.011 | 940 | 805 | 1.5 |
| Example 5 | 1240 | 1050 | 350 | 6.220 | 1080 | 995 | 10.5 |
| Example 6 | 1260 | 1050 | 450 | 6.194 | 1070 | 1010 | 3.1 |

It can be learned from Table 6 that, in this application, a lightweight steel with a density of 5.9 g/cm³ to 6.3 g/cm³, a yield strength of 700 MPa to 1200 MPa, and an elongation of 1.5% to 15% can be obtained by powder sintering, and subsequent solution treatment and aging treatment, and an aluminum oxide phase with fine and uniformly dispersed particles exists in a microstructure of the steel obtained in each example. The current density and mechanical properties are obtained due to the material composition. In this application, the aluminum oxide strengthening phase is generated in situ through reaction in the matrix by using a process such as sintering. It may be understood that performance of a product depends on composition of the product and also depends on a preparation process. The MIM process has many procedures and many parameter variables. For example, in an MIM technology, a particle size range of a powder raw material, a binder system and a ratio, a manner of removing a binder, and the like may be correspondingly adjusted based on a device environment. The composition and performance disclosed in this application can be obtained by using a proper process. In addition, by using the proper process in this application, density may be further reduced, and strength, plasticity, and toughness may be further improved.

It is to be noted that the foregoing descriptions are merely specific implementations of this application, but are not intended to limit the protection scope of this application. Any variation or replacement readily figured out by a person skilled in the art within the technical scope disclosed in this application shall fall within the protection scope of this application. In the case of no conflict, the implementations of this application and the features in the implementations may be mutually combined. Therefore, the protection scope of this application shall be subject to the protection scope of the claims.

## Claims

1. A lightweight steel, comprising:
Fe, in a percentage by weight greater than or equal to 48.18 wt%;
Mn, in a percentage by weight of 30.01 wt% to 35.01 wt%;
Al, in a percentage by weight of 12.01 wt% to 15.01 wt%;
C, in a percentage by weight of 1.0 wt% to 1.5 wt%; and
O, in a percentage by weight of 0.03 wt% to 0.3 wt%.

2. The lightweight steel according to claim 1, wherein aluminum oxide particles are distributed in the lightweight steel, and the aluminum oxide particles substantially have a length and a width both less than or equal to 5 µm.

3. The lightweight steel according to claim 1 or 2, wherein the lightweight steel further comprises V in a percentage by weight less than or equal to 0.6 wt%.

4. The lightweight steel according to claim 3, wherein the percentage by weight of V in the lightweight steel is 0.2 wt% to 0.55 wt%.

5. The lightweight steel according to any one of claims 1 to 4, wherein the percentage by weight of Mn in the lightweight steel is 30.01 wt% to 32.01 wt%.

6. The lightweight steel according to any one of claims 1 to 5, wherein the percentage by weight of Al in the lightweight steel is 12.5 wt% to 13.5 wt%.

7. The lightweight steel according to any one of claims 1 to 6, wherein the percentage by weight of C in the lightweight steel is 1.1 wt% to 1.45 wt%.

8. The lightweight steel according to any one of claims 1 to 7, wherein the percentage by weight of O in the lightweight steel is 0.05 wt% to 0.2 wt%.

9. The lightweight steel according to any one of claims 1 to 8, wherein the lightweight steel further comprises another element comprising one or more of nitrogen, copper, chromium, nickel, titanium, sulfur, phosphorus, boron, hydrogen, zirconium, silicon, tantalum, calcium, zinc, and rare earth metals, in a percentage by weight less than or equal to 1%.

10. The lightweight steel according to any one of claims 1 to 9, wherein the lightweight steel is formed through a metal injection molding process using a powder raw material.

11. The lightweight steel according to any one of claims 1 to 10, wherein a density of the lightweight steel is 5.9 g/cm³ to 6.3 g/cm³.

12. The lightweight steel according to any one of claims 1 to 11, wherein a yield strength of the lightweight steel is 700 MPa to 1200 MPa, and an elongation of the lightweight steel is 1.5% to 20%.

13. A steel structural part, wherein a material used by the steel structural part comprises the lightweight steel according to any one of claims 1 to 12.

14. A preparation method of a lightweight steel, comprising:
providing a powder raw material, wherein the powder raw material comprises:
Fe, in a percentage by weight greater than or equal to 47.39 wt%,
Mn, in a percentage by weight of 30.01 wt% to 36 wt%,
Al, in a percentage by weight of 12.01 wt% to 15.01 wt%,
C, in a percentage by weight of 0.8 wt% to 1.5 wt%, and
O, in a percentage by weight of 0.003 wt% to 0.1 wt%;
mixing the powder raw material and a binder into a green body;
sintering the green body to form a sintered body; and
performing heat treatment on the sintered body.

15. The preparation method of the lightweight steel according to claim 14, wherein the mixing the powder raw material and a binder into a green body comprises:
mixing the powder raw material and the binder to form a paste feed;
granulating the paste feed to form feed particles; and
molding the feed particles into the green body through injection molding.

16. The preparation method of the lightweight steel according to claim 14 or 15, wherein before the sintering the green body, the method further comprises: debinding to remove the binder from the green body.

17. The preparation method of the lightweight steel according to any one of claims 14 to 16, wherein the performing heat treatment on the sintered body comprises: performing solution treatment on the sintered body; and performing aging treatment on the sintered body obtained through the solution treatment.

18. The preparation method of the lightweight steel according to any one of claims 14 to 17, wherein the powder raw material further comprises V in a percentage by weight less than or equal to 0.6 wt%.

19. A steel structural part, prepared by using the preparation method of the lightweight steel according to any one of claims 14 to 18.

20. An electronic device, comprising the steel structural part according to claim 13 or 19.

21. The electronic device according to claim 20, wherein the electronic device further comprises a flexible display screen and a foldable apparatus configured to carry the flexible display screen, the foldable apparatus is configured to drive the flexible display screen to deform, and the foldable apparatus comprises the steel structural part.

22. The electronic device according to claim 21, wherein the foldable apparatus comprises a rotating shaft, and the rotating shaft is the steel structural part.
